# Europäisches Patentamt

# European Patent Office

# Office européen des brevets

(19)

(11) Veröffentlichungsnummer: **0 130 302**
**B1**

(12) **EUROPÄISCHE PATENTSCHRIFT**

(45) Veröffentlichungstag der Patentschrift:
**03.08.88**

(51) Int. Cl.⁴: **B 60 C 11/14**

(21) Anmeldenummer: **84104629.5**

(22) Anmeldetag: **25.04.84**

(54) **Reifen für Fahrzeugräder.**

(30) Priorität: **27.06.83 DE 8318561 U**

(43) Veröffentlichungstag der Anmeldung:
**09.01.85 Patentblatt 85/2**

(45) Bekanntmachung des Hinweises auf die Patenterteilung:
**03.08.88 Patentblatt 88/31**

(84) Benannte Vertragsstaaten:
**AT CH DE FR GB IT LI NL SE**

(56) Entgegenhaltungen:
**DE - A - 2 261 368**
**DE - A - 2 326 455**
**DE - A - 2 407 722**
**FR - A - 85 570**
**FR - A - 1 365 406**
**FR - A - 2 317 109**
**FR - A - 2 354 895**

(73) Patentinhaber: **Mohrlok, Eugen,**
**Reichenbacherstrasse 48, D-7290 Freudenstadt (DE)**

(72) Erfinder: **Mohrlok, Eugen, Reichenbacherstrasse 48,**
**D-7290 Freudenstadt (DE)**

(74) Vertreter: **Ott, Elmar, Dipl.-Ing., Kappelstrasse 8,**
**D-7240 Horb 1 (DE)**

## Beschreibung

Die Erfindung bezieht sich auf Reifen für Fahrzeugräder gemäss Oberbegriff des Patentanspruches 1. Derartige Reifen sind z.B. aus der DE-A-2 261 368 oder der FR-A-1 365 406 bekannt.

Die für Kraftfahrzeuge insbesondere für Personenkraftwagen, verwendeten Reifen bestehen im wesentlichen aus einer Karkasse und einer diese umgebenden Gummischicht, die im Bereich der Lauffläche als Profil ausgebildet ist. Diese Reifen können als Schlauchreifen oder auch schlauchlos ausgebildet sein.

Bei Glatteis besitzen normale Reifen mit Gummilauffläche eine nur sehr geringe Haftung. Zur Erhöhung der Fahrsicherheit sind Eisreifen bekannt, die im Bereich der Lauffläche eine Vielzahl von Stahlstiften besitzen. Diese Stahlstifte werden durch das Eigengewicht des Fahrzeuges in das Eis gedrückt, wodurch der Reibungskoeffizient zwischen Reifen und Strassenoberfläche bei Glatteis wesentlich verbessert wird. Diese Reifen haben jedoch den Nachteil, dass sie auf trockener Fahrbahn eine deutlich schlechtere Bodenhaftung haben als Reifen ohne Stahlstifte. Ausserdem verursachen die Stahlstifte auf trockener Fahrbahn einen äusserst hohen Fahrbahnabrieb, so dass beträchtliche Fahrbahnschäden entstehen.

Der Erfindung liegt die Aufgabe zugrunde, einen gattungsgemässen Reifen für Fahrzeugräder zu schaffen, der auf eisglatter Fahrbahn eine gute Haftung gewährleistet und bei dem die Stöpsel sicher gehalten sind.

Die Lösung dieser Aufgabe wird bei einem Reifen der eingangs genannten Gattung durch die im Anspruch 1 angegebenen Merkmale erhalten.

Das Stollenprofil der Reifen hat Bohrungen oder Aussparungen in den Stollen, in die eine Gummimischung einvulkanisiert ist, die aus kegelförmigen Stöpseln besteht, deren Durchmesser im Bereich der Lauffläche kleiner ist als auf der der Karkasse zugewandten Seite. Die Gummimischung kann härter sein als die des die Stöpsel umgebenden Reifenmaterials. Als Körnung dienen Stahlkörner aus Drahtabschnitten, deren Kanten gebrochen oder abgerundet sind und eine aufgerauhte Oberfläche haben. Die Stöpsel mit einer derart ausgebildeten Körnung ermöglichen es, die Reifen so auszubilden, dass auf eisglatter Fahrbahn eine gewünschte Reibung bzw. eine entsprechend gute Haftung gewährleistet ist. Je nach Reifengrösse oder Anwendungsgebiet können die Stöpsel mit der in ihnen enthaltenen Körnung an die jeweiligen Anforderungen angepasst sein.

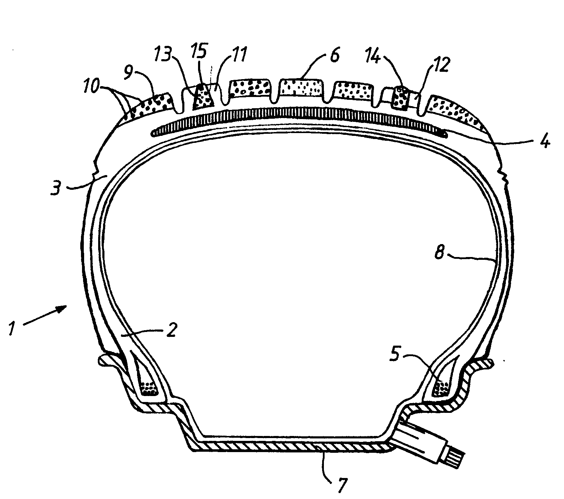

Die Erfindung wird nachfolgend anhand der Zeichnung, die einen erfindungsgemässen Reifen mit Felge im Querschnitt zeigt, näher erläutert.

Der dargestellte Reifen 1 besteht aus einer Karkasse 2, einer Gummischicht 3, einem Stahlgürtel 4, einem Wulstkern 5 und einer grobstolligen Lauffläche 6. Der Reifen sitzt auf einer Felge 7, gegen die er durch den inneren Luftdruck festgepresst wird.

Im dargestellten Ausführungsbeispiel ist im Innern des Reifens ein Schlauch 8 angeordnet. Der Reifen könnte aber auch als schlauchloser Reifen ausgebildet sein.

Im Bereich der grobstolligen Lauffläche 6 besitzt der Reifen 1 eine Gummimischung 9, die körniges Material 10 enthält. Dabei kann es sich um Sandkörner, Keramik- oder Glasteilchen oder um andere harte Materialteilchen handeln. Der Stollen 11 besitzt jeweils eine Aussparung bzw. Bohrung, in die ein Stöpsel 13 einvulkanisiert ist. Dieser Stöpsel 13 besteht aus einem Gummigemisch mit eingeschlossener Körnung aus Stahldrahtabschnitten während der übrige Stollen 11 keine oder eine andere Körnung enthält. Der Stöpsel 13 ist dabei in seiner Form so ausgebildet, dass er an seiner nach aussen abstehenden Seite 15 einen kleineren Durchmesser hat als an seiner gegenüberliegenden Seite. Auf diese Weise wird sichergestellt, dass der Stöpsel 13 auch bei hohen Geschwindigkeiten sicher im Profil sitzt. Das für die Stöpsel 13 verwendete Gummigemisch kann auch einen abriebfesteren Gummi enthalten als die übrige Lauffläche.

Durch die Verwendung eines geeigneten Gummimaterials, Naturkautschuk oder Synthetikmaterial, und durch die jeweils verwendete Körnung, lässt sich an der Lauffläche 6 ein gewünschter Härtegrad und damit eine Anpassung an die jeweiligen Einsatzbedingungen erreichen. Es können auf diese Weise Härtegrade zwischen eins und mehr als acht an der Lauffläche 6 erzielt werden.

Versuche mit der an der Lauffläche 6 einvulkanisierten Stahlkörnung haben sehr gute Laufeigenschaften auf Eis gezeigt. In die Lauffläche 6 werden zu diesem Zweck Stahlkörner mit einer Körnung von ca. 1 mm einvulkanisiert, wobei die Körnung im Bereich des Stollens 11 bis zu 2 mm betragen kann. Die Stahlkörner lassen sich auf einfache Weise aus Drahtabschnitten herstellen, wobei Stahldrähte von 1 mm bis 2 mm Verwendung finden können. Für besondere Anwendungen könnte natürlich auch eine grobere oder feinere Körnung verwendet werden.

Die aus Drahtabschnitten bestehenden Stahlkörner werden vor dem Einvulkanisieren getrommelt, damit die scharfen Kanten abgeschliffen werden und eine gewisse Rauhigkeit an der Oberfläche der Stahlkörner entsteht. Diese Rauhigkeit begünstigt eine feste Verbindung zwischen der Gummimischung des Reifens und der einvulkanisierten Stahlkörner. Durch die abgerundeten Kanten wird vermieden, dass die Körnung den Reifen beschädigt.

## Patentansprüche

1. Reifen für Fahrzeugräder, der im wesentlichen aus einer Karkasse (2) und der äusseren, die Lauffläche (6) und die Seitenflächen bildenden Gummischicht (3) besteht, die im Bereich der Lauffläche (6) als Stollenprofil ausgebildet ist und wenigstens teilweise eine Gummimischung (9) aus Gummi und einem harten, körnigen Material (10) enthält, wobei in die Stollen (11) Stöpsel (13) aus einer Gummimischung aus Gummi und einem harten körnigen Material einvulkanisiert sind, dadurch gekennzeichnet, dass die Stöpsel (13) an ihren radial nach aussen gerichteten Seiten (15) einen kleineren Durchmesser haben als an ihrer radial nach innen gerichteten Seiten, und dass das harte körnige Material aus in die Stöpsel (13) eingebrachten Stahldrahtabschnitten besteht, deren Kanten gebrochen oder abgerundet sind und eine aufgerauhte Oberfläche haben.

2. Reifen nach Anspruch 1, dadurch gekennzeichnet, dass die Körnung der Stahldrahtabschnitte im gesamten Bereich der Lauffläche (6) ca. 1 mm beträgt, und dass die Körnung im Bereich der Stollen (11) wenigstens teilweise ca. 2 mm beträgt.

## Claims

1. Tyre for vehicle wheels, which essentially comprises a carcass (2) and the outer rubber layer (3) forming the tread (6) and the sidewalls, which in the vicinity of tread (6) is constructed as a protuberance profile and at least partly contains a rubber mixture (9) formed from rubber and a hard, granular material (10), whereby into the protuberances (11) are vulcanized pegs (13) from a rubber mixture of rubber and a hard, granular material, characterized in that the pegs (13) have a smaller diameter on the radially outwardly directed sides (15) than on their radially inwardly directed sides and that the hard, granular material comprises steel wire portions incorporated into the pegs (13) and whose edges are broken and rounded and have a roughened surface.

2. Tyre according to claim 1, characterized in that the grain size of the steel wire portions is approximately 1 mm throughout the area of tread (6) and that in the vicinity of the protuberances (11) said size is at least partly approximately 2 mm.

## Revendications

1. Bandage pneumatique ou «pneumatique» pour roue de véhicule, qui consiste essentiellement en une carcasse (2) et en la couche (3) externe de caoutchouc formant la surface (6) de roulement et les surfaces latérales, cette couche étant configurée, dans la zone de la surface (6) de roulement, en un profilé à structure comportant des saillies et contenant au moins partiellement un mélange (9) de caoutchouc formé de caoutchouc et d'une matière (10) grenue et dure, des crampons (13), constitués d'un mélange de caoutchouc et d'une matière grenue dure, étant incorporés par vulcanisation aux reliefs (11) des structures, pneumatique caractérisé en ce que les crampons (13) présentent, sur leurs côtés dirigés radialement vers l'extérieur, un plus petit diamètre que sur leurs côtés (15) dirigés radialement vers l'intérieur, et en ce que la matière grenue dure consiste en des tronçons de fil d'acier incorporés aux crampons (13) et dont les arêtes sont brisées ou arrondies et qui ont une surface rendue rugueuse.

2. Bandage pneumatique selon la revendication 1, caractérisé en ce que la granulométrie des tronçons de fil d'acier correspond dans l'ensemble de la surface (6) de roulement à une longueur de tronçon d'environ 1 mm et, dans la zone des reliefs (11) cette granulométrie ou longueur de tronçon est au moins en partie d'environ 2 mm.